# EUROPÄISCHE PATENTSCHRIFT

(11) **EP 2 801 511 B1**
(45) Veröffentlichungstag und Bekanntmachung des Hinweises auf die Patenterteilung: **11.07.2018**
(21) Anmeldenummer: 14167780.7
(22) Anmeldetag: 09.05.2014
(51) Int. Cl.: B62D 15/02, B60R 25/04, B60R 25/20, B60L 15/20, G05D 1/00, G01S 13/93

(54) **System zum Einparken eines Kraftfahrzeuges in eine Parklücke mit einem am Kraftfahrzeug angeordneten Kommunikationsfeld**
System for parking a motor vehicle in a parking space with a communication field attached to the motor vehicle
Système de stationnement d'un véhicule automobile dans un espace de stationnement doté d'un champ de communication sur le véhicule automobile

(30) Priorität: 10.05.2013 DE 102013104859
(43) Veröffentlichungstag der Anmeldung: 12.11.2014
(73) Patentinhaber: Huf Hülsbeck & Fürst GmbH & Co. KG, 42551 Velbert (DE)
(72) Erfinder: Schindler, Mirko, 42549 Velbert (DE)
(74) Vertreter: Vogel, Andreas

(56) Entgegenhaltungen:
- EP-A1- 0 479 735
- DE-A1-102004 027 869
- DE-A1-102008 018 186
- DE-A1-102008 051 982
- DE-A1-102010 056 064
- DE-A1-102012 007 984
- JP-A- 2006 302 187
- JP-A- 2008 174 192
- US-A1- 2002 152 010

## Beschreibung

Die Erfindung betrifft ein System zum Einparken eines Kraftfahrzeuges in eine Parklücke.

Aus der EP 1 533 181 A2 ist es bekannt, autonom ein Kraftfahrzeug in eine Parklücke zu manövrieren. Hierbei erkennt eine innerhalb des Kraftfahrzeuges angeordnete Elektronikeinheit eine mögliche Parklücke, wobei der Fahrer anschließend im Fahrzeuginnenraum verbleibt und das Kraftfahrzeug selbstständig in die Parklücke hinein fährt. Es hat sich nachteiligerweise gezeigt, dass einige Parklücken für einen derartigen Einparkvorgang nicht geeignet sind, da sie aufgrund der Größe zu schmal sind, insbesondere dass zwar das Kraftfahrzeug geometrisch in die Parklücke passt, jedoch ein anschließendes Aussteigen des Kraftfahrzeugbenutzers nicht mehr möglich ist. Auch aus der DE 10 2012 007 984 A1 und der JP 2008174192 A sind Systeme zum Einparken eines Kraftfahrzeuges in eine Parklücke bekannt, wobei nachteilhafterweise Sicherheitsrisiken für den Fahrer und/oder Passanten bei der Bedienung entstehen können. Das Dokument DE 10 2012 007 984 A1 ist als nächstliegender Stand der Technik zu sehen und zeigt ein Verfahren und ein System zum Einparken eines Kraftfahrzeuges in eine Parklücke, mit einer innerhalb des Kraftfahrzeuges angeordneten Elektronikeinheit, die bei einer Aktivierung durch einen Benutzer eine mögliche Parklücke sucht, einem Kommunikationsgerät, das derart angeordnet ist, dass das Kommunikationsgerät von außerhalb des Kraftfahrzeuges durch den Benutzer aktivierbar ist, um einen Antrieb des Kraftfahrzeuges zu steuern, wodurch ein fahrerloses Einparken erfolgt. Die Aufgabe der vorliegenden Erfindung ist es, die oben genannten Nachteile zu vermeiden, insbesondere ein System zum Einparken eines Kraftfahrzeuges in eine Parklücke sowie ein dazugehöriges Verfahren zu schaffen, bei dem ein Einparken eines Kraftfahrzeuges auch in kleinere, engere Parklücken denkbar ist.
Die Aufgabe der vorliegenden Erfindung wird durch ein System mit sämtlichen Merkmalen des Patentanspruches 1 gelöst. Zudem wird die Aufgabe durch ein Verfahren mit sämtlichen Merkmalen des unabhängigen Patentanspruches 9 gelöst. In den abhängigen Patentansprüchen zu den oben genannten unabhängigen Ansprüchen sind mögliche Ausführungsformen vorgeschlagen.
Erfindungsgemäß ist ein System zum Einparken eines Kraftfahrzeuges in eine Parklücke mit einer innerhalb des Kraftfahrzeuges angeordneten Elektronikeinheit vorgesehen, die bei einer Aktivierung durch einen Benutzer eine mögliche Parklücke sucht, und einem Kommunikationsfeld, das derart am Kraftfahrzeug angeordnet ist, dass das Kommunikationsfeld von außerhalb des Kraftfahrzeuges durch den Benutzer aktivierbar ist, um einen Antrieb des Kraftfahrzeuges zu steuern, wodurch ein fahrerloses Einparken erfolgt. Ein besonderer Vorteil der Erfindung ist es, dass ein Kraftfahrzeug besonders in engen Parklücken eingeparkt werden kann, die insbesondere Parkboxen sind, bei denen links und rechts bezogen auf die Fahrtrichtung des Kraftfahrzeuges die Parklücke stark begrenzt ist. Die Erfindung schließt hiermit ein, dass der Benutzer (Fahrer) vor dem eigentlichen automatischen Einparkvorgang vorher aus dem Kraftfahrzeug aussteigt und das Kraftfahrzeug vom Außenbereich, insbesondere in der Nähe des Kommunikationsfeldes in die enge Parklücke manövriert. Das Kommunikationsfeld kann hierbei als Einparksteuerung dienen, um das Kraftfahrzeug in die Parklücke durch den Benutzer zu bewegen. Hierbei kann ein direkter Kontakt mit dem Kommunikationsfeld durch den Benutzer erforderlich sein. Ebenfalls schließt die Erfindung mit ein, dass der Benutzer berührungslos mit dem Kommunikationsfeld kommuniziert, um das Kraftfahrzeug in die Parklücke zu bewegen. Hierbei erkennt das Kommunikationsfeld die Aktivierung des Benutzers, sodass der Antrieb des Kraftfahrzeuges entsprechend angesteuert wird, wodurch das fahrerlose Einparken in die enge Parklücke erfolgt. Das Kommunikationsfeld kann hierbei an diversen Stellen am Kraftfahrzeug fest und/oder unbeweglich angeordnet sein. Vorteilhafterweise kann das Kommunikationsfeld am Heckbereich des Kraftfahrzeuges oder am vorderen Bereich des Kraftfahrzeuges angeordnet sein, insbesondere dass das Kommunikationsfeld an einer Handhabe des Kraftfahrzeuges angeordnet ist. Die Handhabe kann z. B. ein Taster sein, den der Benutzer aktivieren kann, um das Kommunikationsfeld entsprechend anzusteuern, bzw. den Antrieb für das fahrerlose Einparken zu aktivieren. Der Taster kann gleichzeitig ein Auslöseelement für den Verriegelungsmechanismus bzw. Entriegelungsmechanismus des Heckbereiches des Kraftfahrzeuges, insbesondere des Kofferraumes sein. Vorteilhafterweise ist der Taster des Heckbereiches mit dem Kommunikationsfeld integriert.

Erfindungsgemäß weist das Kommunikationsfeld mindestens eine Überwachungszone auf, wobei über ein definiertes Bewegungsmuster des Benutzers in der Überwachungszone das Kommunikationsfeld aktivierbar ist. Zudem weist das Kommunikationsfeld ein Bedienfeld auf. Insbesondere kann das Kommunikationsfeld einen Taster und/oder einen Berührungssensor und/oder einen Näherungssensor aufweisen und/oder es kann das Kommunikationsfeld mit einem Taster und/oder einen Berührungssensor und/oder einen Näherungssensor elektronisch verbunden sein. Ebenfalls kann vorgesehen sein, dass das Kommunikationsfeld mehrere Überwachungszonen aufweist, um das Bewegungsmuster des Bedieners zuverlässig zu detektieren. Die Überwachungszone kann durch den Taster und/oder den Berührungssensor und/oder den Näherungssensor realisiert werden, die die Überwachungszone entsprechend überwachen. In einer möglichen Ausführungsform der Erfindung ist es notwendig, dass der Benutzer in der Überwachungszone das Kommunikationsfeld, insbesondere das Bedienfeld berührt, wobei es auch ausreichen kann, dass der Benutzer lediglich in die Überwachungszone gelangt, ohne tatsächlich das Kommunikationsfeld, insbesondere das Bedienfeld zu kontaktieren. Durch den Einsatz von mehreren Überwachungszonen kann die Funktionssicherheit zur Detektion des Bewegungsmuster wesentlich erhöht werden. Hierbei kann das Bewegungsmuster eine definierte Bewegungsgestik des Benutzers sein, die vom Kommunikationsfeld innerhalb der Überwachungszonen zu erfassen ist, um eine definierte fahrzeugseitige Aktion, und zwar den Antrieb des Kraftfahrzeuges zu steuern, wodurch ein fahrerloses Einparken ermöglicht wird.

Vorteilhafterweise kann es bei dem Bewegungsmuster sich um einfache Hin- und/oder Herbewegungen eines Körperteils des Benutzers in der Nähe des Kommunikationsfeldes und/oder der Überwachungszone handeln. Die vom Kommunikationsfeld zu erkennenden Bewegungen können auch komplexer sein, worauf im Folgenden noch eingegangen wird.

Die Erfindung sieht vor, dass zum einen es denkbar ist, dass im Rahmen des Bewegungsmusters der Benutzer das Kommunikationsfeld berührt. Ebenfalls ist es denkbar, dass das Bewegungsmuster vollständig berührungslos zum Kommunikationsfeld in einem definierten, insbesonderen nahem Abstand zum Kraftfahrzeug, insbesondere zum Kommunikationsfeld erfolgt.

In einer die Erfindung verbessernden Maßnahme kann vorgesehen sein, dass neben einer Bewegung des Kraftfahrzeuges in die Parklücke der Benutzer über das Bewegungsmuster andere fahrzeugseitige Aktionen auslösen kann, z. B. das Kraftfahrzeug zu verriegeln und/oder zu entriegeln.

Zudem ist es denkbar, dass ein mobiler ID-Geber vorgesehen ist, der zur Authentifizierungsabfrage mit dem Kraftfahrzeug, insbesondere mit der Elektronikeinheit dient. Das System kann erfindungsgemäß derart ausgeführt sein, dass bei einer positiven Sensierung eines Bewegungsmusters des Benutzers durch das Kommunikationsfeld die Authentifizierungsabfrage gestartet wird. Eine Datenkommunikation erfolgt hierbei zwischen dem bedienerseitigen ID-Geber und dem Kraftfahrzeug, insbesondere einer kraftfahrzeugseitigen Sende-/Empfangseinheit. Liegt eine positive Authentifizierung vor, erzeugt eine Elektronik des Kraftfahrzeuges ein Auslösesignal, wodurch der Antrieb des Kraftfahrzeuges zum fahrerlosen Einparken aktiviert wird. Ebenfalls kann vorgesehen sein, dass das Kommunikationsfeld vor einer Erkennung des Bewegungsmusters bereits die oben genannte Authentifizierungsabfrage startet. Dieses kann beispielsweise dadurch realisiert sein, dass ab einem definierten Abstand zum Kraftfahrzeug diese Authentifizierungsabfrage bereits durchgeführt wird. Liegt eine positive Authentifizierung vor, kann der Benutzer über ein definiertes Bewegungsmuster den Antrieb des Kraftfahrzeuges aktivieren, um ein fahrerloses Einparken zu starten.

Zudem ist es denkbar, dass über das Kommunikationsfeld ein elektromagnetisches Feld aufbaubar ist, insbesondere dass das elektromagnetische Feld durch Induktion erzeugbar ist. Über das elektromagnetische Feld kann z. B. auch die Authentifizierungsabfrage erfolgen, welches eine große Sicherheit darstellt, insbesondere manipulationssicher ist.

Ferner umfasst die Erfindung, dass die Elektronikeinheit mit einem Parkassistenzsystem verbunden ist und/oder dass die Elektronikeinheit Teil eines Parkassistenzsystems ist. Das Parkassistenzsystem kann z. B. dafür sorgen, eine adäquate Parklücke für das Kraftfahrzeug zu suchen und/oder den eigentlichen Einparkvorgang durchzuführen und/oder zu steuern und/oder zu beobachten. Vorteilhafterweise weist das Parkassistenzsystem diverse Sensoren auf, die den Außenbereich des Kraftfahrzeuges überwachen, sodass es während des Einparkvorganges nicht zu einer Kollision mit anderen Gegenständen und/oder Teilnehmern im Straßenverkehr kommt.

Zudem kann erfindungsgemäß das System ein Kommunikationsfeld mit einer optischen Anzeige aufweisen. Die optische Anzeige kann z. B. ein Display oder ein Displayelement sein, welches den Benutzer, der vor dem Kommunikationsfeld steht, diverse Informationen beim Einparkvorgang zur Verfügung stellt. Beispielsweise ist es denkbar, dass über eine farbliche Anzeige der Einparkvorgang visualisierbar ist. Es ist denkbar, dass eine grüne Anzeige dafür steht, dass der Einparkvorgang noch nicht abgeschlossen ist. Eine rote Anzeige am Kommunikationsfeld kann signalisieren, dass der Einparkvorgang abgeschlossen ist.

Ebenfalls kann vorgesehen sein, dass die optische Anzeige das Umfeld des Kraftfahrzeuges in der Parklücke visualisiert, sodass der Benutzer visuell den Einparkvorgang am Kommunikationsfeld betrachten kann. Das Kommunikationsfeld dient somit auch als Bildschirm.

Zudem kann erfindungsgemäß das System ein Bedienfeld am Kommunikationsfeld aufweisen, um das Einparken zu beeinflussen, insbesondere zu beenden oder zu korrigieren. Diese Beeinflussung ist ebenfalls über ein definiertes Bewegungsmuster denkbar, welches vom Kommunikationsfeld initiiert wird. Das Bedienfeld kann z. B. vom Benutzer aktiviert werden, um manuell den Einparkvorgang zu verlangsamen, zu beschleunigen oder auch zu korrigieren.

Ebenfalls schließt die Erfindung mit ein, dass das Kommunikationsfeld an einem Heckemblem des Kraftfahrzeuges angeordnet ist. Hierdurch lässt sich das Kommunikationsfeld am Kraftfahrzeug elegant "verstecken", wobei gleichzeitig eine hohe Funktionalität dem Benutzer geboten wird.
Zusätzlich schließt das erfindungsgemäße System mit ein, dass weitere Auslösesignale über eine Aktivierung des Kommunikationsfeldes erzeugt werden können:
Öffnen des Kraftfahrzeugfensters und/oder Schließen des Kraftfahrzeugfensters und/oder Öffnen des Tankdeckels des Kraftfahrzeuges und/oder Schließen des Tankdeckels des Kraftfahrzeuges und/oder Schließen des Schiebedaches des Kraftfahrzeuges und/oder Öffnen des Schiebedaches des Kraftfahrzeuges.
Zudem wird die oben genannte Aufgabe durch ein Verfahren zum Einparken eines Kraftfahrzeuges in eine Parklücke nach Anspruch 9 gelöst. Die zuvor genannten Vorteile des erfindungsgemäßen Systems entsprechen den Vorteilen des hier genannten Verfahrens.
Zudem ist es in einer weiteren Ausführungsform des erfindungsgemäßen Verfahrens denkbar, dass der Schritt (a) automatisch gestartet wird oder durch eine bewusste Handlung des Benutzers innerhalb des Kraftfahrzeuges gestartet wird. Ein mögliches Kriterium zum Starten einer Parklücke gemäß des Schrittes (a) kann durch den Benutzer initiiert werden, bei dem der Benutzer z. B. auf einen Knopf, Schalter oder ein Aktivierungselement innerhalb des Kraftfahrzeuges drückt, bzw. betätigt. Ebenfalls kann der erfindungsgemäße Schritt über einen automatischen Prozess gestartet werden, der nach entsprechenden Kriterien erkennt bzw. getriggert wird, dass der Benutzer eine Parklückenlokalisierung wünscht. In diesem Zusammenhang ist es denkbar, eine Home-Funktionalität innerhalb der kraftfahrzeugseitigen Elektronikeinheit einzusetzen, bei der mittels z. B. GPS erkannt wird, dass der Fahrer sich an seinem typischen Parkplatz befindet.

In einer weiteren die Erfindung verbessernden Maßnahme ist es denkbar, dass vor dem Schritt (c) oder während des Schrittes (c) eine Authentifizierungsabfrage zwischen dem ID-Geber und dem Kraftfahrzeug erfolgt, wobei bei einem negativen Ergebnis der Authentifizierungsabfrage der Schritt (c) abgebrochen wird.

Zudem umfasst die Erfindung, dass das Kommunikationsfeld mindestens eine Überwachungszone aufweist, wobei über ein Bewegungsmuster des Benutzers innerhalb der Überwachungszone der Antrieb des Kraftfahrzeuges entsprechend gesteuert wird, insbesondere eine Vorwärtsbewegung und/oder eine Rückwärtsbewegung und/oder eine Richtungskorrektur und/oder eine Seitenbewegung und/oder eine Beschleunigung und/oder eine Verlangsamung und/oder ein Einparkabbruch des Kraftfahrzeug erfolgt. Zum Beispiel kann eine Bewegung in Richtung Kommunikationsfeld eine Bewegung des Kraftfahrzeuges in die gleiche Richtung auslösen. Ebenfalls kann vorgesehen sein, dass über eine Kickbewegung eines Beines des Benutzers der Antrieb des Kraftfahrzeuges zur Bewegung des Kraftfahrzeuges ausgelöst werden kann. Ebenfalls schließt die Erfindung mit ein, dass zum Starten des Kraftfahrzeuges eine bewusste Aktivierung des Kommunikationsfeldes durch den Benutzer erfolgen muss. Befindet sich das Kraftfahrzeug in der engen Parklücke, kann das erfindungsgemäße Verfahren derart ausgeführt sein, dass der Antrieb zur Bewegung des Kraftfahrzeuges automatisch deaktiviert wird und somit das Kraftfahrzeug stoppt. Ebenfalls ist es erfindungsgemäß innerhalb des Verfahrens denkbar, dass das Kommunikationsfeld eine optische Anzeige aufweist, die während des Einparkens eine optische Rückmeldung dem Benutzer liefert, insbesondere inwieweit der Einparkvorgang aktiv ist oder abgeschlossen ist. Zusätzlich und/oder alternativ kann das erfindungsgemäße Verfahren mit umfassen, dass während des Schrittes (c) ein Parkassistenzsystem des Kraftfahrzeuges aktiv ist. Hierbei kann es von Vorteil sein, dass die Elektronikeinheit eine Sensorik aufweist, die während des Schrittes (a) den Außenbereich des Kraftfahrzeuges nach einer Parklücke untersucht, insbesondere dass das Auffinden einer Parklücke mittels zumindest einer Kamera oder mittels Radar durchgeführt wird.

Weitere Vorteile, Merkmale und Einzelheiten der Erfindung ergeben sich aus den Unteransprüchen und der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale, jeweils einzeln für sich oder in beliebiger Kombination erfindungswesentlich sein. Es zeigen:
- Fig. 1: eine schematische Ansicht eines Kraftfahrzeuges mit einem System zum Einparken in eine Parklücke,
- Fig. 2: eine weitere Darstellung eines Heckbereiches eines Kraftfahrzeuges mit einem Kommunikationsfeld,
- Fig. 3: ein weiteres Ausführungsbeispiel eines Heckbereiches eines Kraftfahrzeuges gemäß Figur 2,
- Fig. 4: eine vereinfachte Darstellung eines Kommunikationsfeldes für ein Fahrzeug gemäß Figur 1 bis Figur 3,
- Fig. 5: ein Verfahrensschema zum Betreiben eines Verfahrens zum Einparken eines Kraftfahrzeuges in eine Parklücke,
- Fig. 6: eine schematische Darstellung zur Verdeutlichung eines Bewegungsmusters, wodurch das Kommunikationsfeld aktivierbar ist,
- Fig. 7: eine weitere Darstellung bzgl. eines Bewegungsmusters gemäß Figur 6 und
- Fig. 8: eine Draufsicht auf ein Kraftfahrzeug, welches in eine Parklücke zu manövrieren ist.

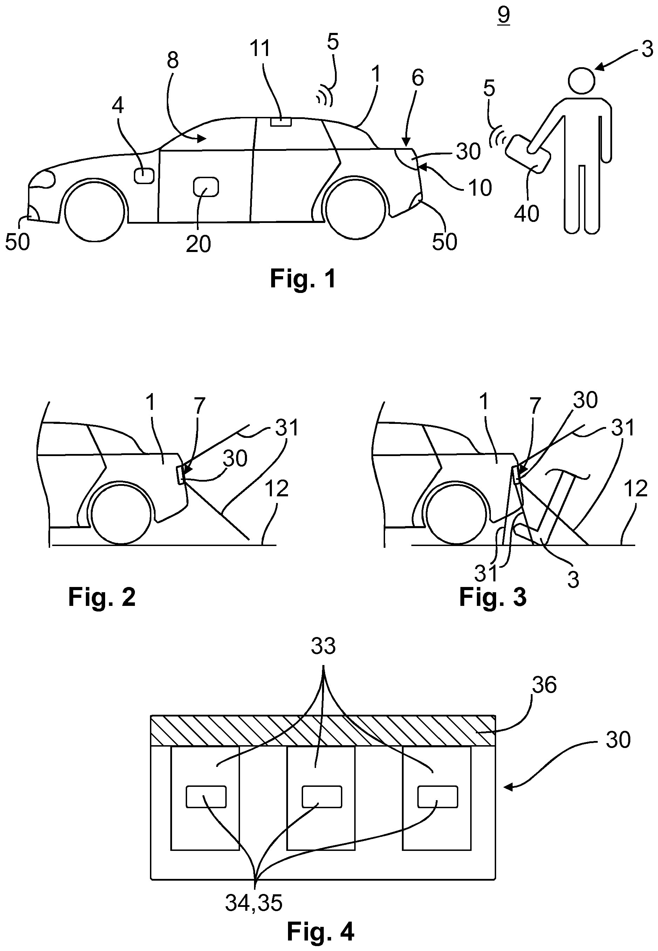

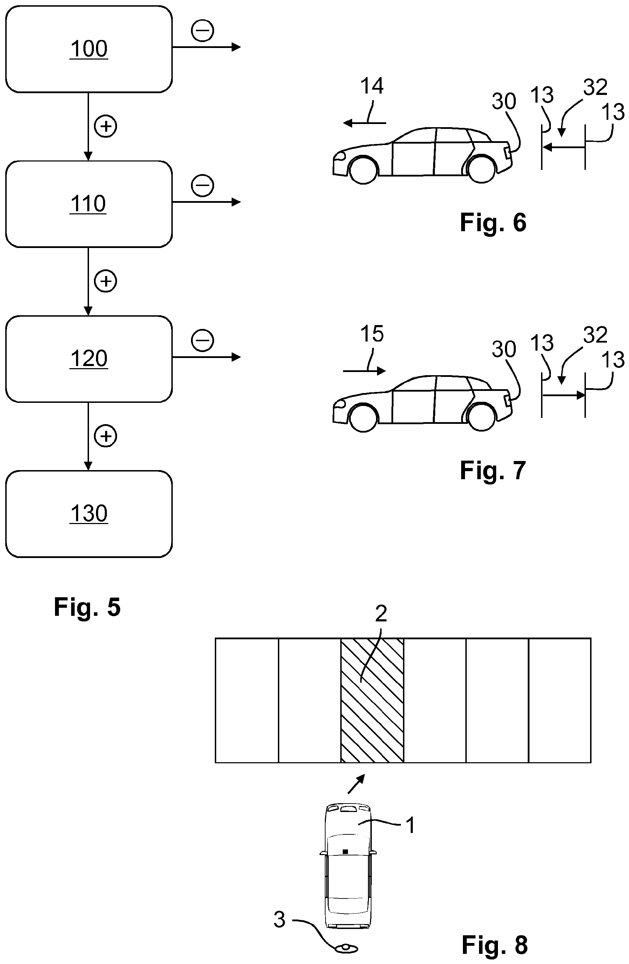

Figur 1 zeigt ein Kraftfahrzeug 1, das im Innenraum 8 eine Elektronikeinheit 20 aufweist. Zudem ist am Heckbereich 6 des Kraftfahrzeuges 1 ein Kommunikationsfeld 30 vorgesehen. Das Kommunikationsfeld 30 kann hierbei durch einen Benutzer 3, der einen mobilen Identifikationsgeber 40 (im Folgenden auch ID-Geber genannt), aktiviert werden, um einen Antrieb 4 des Kraftfahrzeuges 1 anzusprechen und/oder zu aktivieren und/oder zu steuern, wodurch ein fahrerloses Einparken in eine Parklücke 2, die beispielsweise in Figur 8 gezeigt ist, erfolgen kann.

Im vorliegenden Ausführungsbeispiel befindet sich das Kommunikationsfeld 30 am Heckbereich 6 des Kraftfahrzeuges 1. Alternativ ist es denkbar, dass das Kommunikationsfeld 30 an einer weiteren Stelle an der Kraftfahrzeugkarosserie angeordnet sein kann, z. B. am vorderen Bereich des Kraftfahrzeuges 1, das bedeutet an der dem Heckbereich 6 gegenüberliegenden Seite.

Gemäß Figur 2 und Figur 3 ist verdeutlicht, dass das Kommunikationsfeld 30 eine oder mehrere Überwachungszonen 31 aufweisen kann, wobei gemäß Figur 3 eine Überwachungszone 31 in Richtung Boden 12 ausgerichtet ist. Um das Kommunikationsfeld 30 entsprechend zu aktivieren, ist ein definiertes Bewegungsmuster 32 des Benutzers 3 notwendig, welches schematisch in Figur 6 oder in Figur 7 gezeigt ist. Entsprechend des Bewegungsmusters 3 kann eine definierte Anweisung für den Parkvorgang des Kraftfahrzeuges 1 ausgelöst werden. Das Bewegungsmuster 32 wird durch das erfindungsgemäße Kommunikationsfeld 30 erkannt, wobei die Aktivierung des Kommunikationsfeldes 30 berührungslos oder über eine tatsächliche Kontaktierung des Kommunikationsfeldes 30 erfolgen kann. Gemäß Figur 6 kann durch eine Annäherung der schematisch dargestellten Hand 13 zum Kommunikationsfeld 30 erreicht werden, dass das Kraftfahrzeug 1 nach vorne fährt, das bedeutet in die Richtung des Bezugszeichens 14. Eine Entfernung der Hand 13 vom Kommunikationsfeld 30 bedeutet gleichsam, dass das Kraftfahrzeug 1 in die Richtung gemäß des Bezugszeichens 15 bewegt wird, welches in Figur 7 gezeigt ist. Weitere Bewegungsmuster sind denkbar.

Gemäß Figur 4 ist das Kommunikationsfeld 30 schematisch gezeigt, welches ein Bedienfeld 33 umfasst, über das das Bewegungsmuster 32 erkannt werden kann. Auch hier ist es denkbar, dass das Kommunikationsfeld 30 kontaktlos oder über eine tatsächliche Berührung funktioniert. Beispielsweise ist es denkbar, dass das Kommunikationsfeld 30 einen Taster 34 aufweist, um beispielsweise die Bewegung des Kraftfahrzeuges zu starten, zu verlangsamen, zu beschleunigen oder auch abzubrechen. Das Kommunikationsfeld 30 kann auch alternativ einen Sensor 35 aufweisen, der als Berührungssensor 35 oder als Näherungssensor 35 ausgeführt ist, mit dem die soeben genannten Funktionen auslösbar sind. Zudem ist es denkbar, dass das Kommunikationsfeld 30 gemäß Figur 4 eine optische Anzeige 36 umfasst, die dem Benutzer eine Rückmeldung schafft, wobei die Rückmeldung diverse Informationen umfassen kann. Zum Beispiel ist es denkbar, dass die optische Anzeige 36 eine grüne Farbe darstellen kann, die einen möglichen Start für den Einparkvorgang visualisiert. Zudem ist es denkbar, dass die optische Anzeige 36 über eine rote Darstellung die Information dem Benutzer bereitstellt, dass der Einparkvorgang soeben beendet wurde und/oder nicht möglich ist.

Der Kern der Erfindung, der in sämtlichen Figuren gezeigt ist, ist hierbei, dass über das Kommunikationsfeld 30 das fahrerlose Einparken bequem beeinflusst, insbesondere beendet oder korrigiert oder gestartet werden kann. Besonders bei sehr engen Parklücken, die in Figur 8 beispielsweise gezeigt sind, bietet sich das vorliegende Einparksystem an. Befindet sich der Benutzer 3 mit seinem Kraftfahrzeug 1 in der Nähe einer Parklücke 2 bzw. sucht in einem bestimmten Ort eine Parklücke 2, ist es gemäß des erfindungsgemäßen Verfahrens zunächst notwendig, dass die Elektronikeinheit 20 des Kraftfahrzeuges 1 aktiviert wird, um die geeignete Parklücke 2 ausfindig zu machen. Dieser Suchvorgang ist mit dem Bezugszeichen 100 in Figur 5 gezeigt. Der Suchvorgang im Bezugszeichen 100 kann z. B. über eine Kamera oder mittels Radar und/oder in Kombination mit einem GPS-Verfahren erfolgen. Zudem kann der Schritt 100 automatisch gestartet werden oder durch eine bewusste Handlung des Benutzers 3 innerhalb des Kraftfahrzeuges 1 getriggert werden. Beispielsweise ist es denkbar, dass der Benutzer 3 ein entsprechendes Bedienfeld innerhalb des Kraftfahrzeuges 1 aktiviert, um diesen Suchvorgang zu starten. Hierbei sei anzuführen, dass die Elektronikeinheit 20 mit einem Parkassistenzsystems 50 verbunden sein kann oder ein Bestandteil eines Parkassistenzsystems 50 sein kann, welches schematisch in Figur 1 angedeutet ist.

Nachdem nun die Elektronikeinheit 20 eine adäquate Parklücke 2 gefunden hat, erfolgt zunächst informativ eine Rückmeldung für den Benutzer 3, und zwar dass das System die adäquate Parklücke lokalisiert hat und der Benutzer 3 aus dem Kraftfahrzeug 1 aussteigen kann. Hierbei verlässt der Benutzer 3 den Innenraum 8 des Kraftfahrzeuges 1 und begibt sich in Richtung des Kommunikationsfeldes 30. Hierbei trägt der Benutzer 3 den ID-Geber 40 mit sich. Damit über die Betätigung des Kommunikationsfeldes 30 durch den Benutzer 3 der Antrieb 4 des Kraftfahrzeuges 1 angesteuert werden kann, um ein fahrerloses Einparken zu starten, erfolgt zuvor noch eine Authentifizierungsabfrage 5 mit dem Kraftfahrzeug 1, wobei hierbei überprüft wird, inwieweit der Benutzer 3 berechtigt ist über ein definiertes Bewegungsmuster am Kommunikationsfeld 30 den Antrieb 4 des Kraftfahrzeuges 1 entsprechend zu steuern und/oder zu aktivieren. Bei der Authentifizierungsabfrage 5 wird hierbei überprüft, inwieweit der Code des ID-Gebers 40 der "Richtige" ist, sodass aus Sicherheitsgründen lediglich der Benutzer 3, der zuvor im Innenraum 8 des Kraftfahrzeuges 1 gesessen hat, den Einparkvorgang des Kraftfahrzeuges 1 von außen vor dem Kommunikationsfeld 30 steuern kann.

Während der Authentifizierungsabfrage 5 folgt eine Datenkommunikation zwischen dem ID-Geber 40 und einer Sende- und/oder Empfangseinheit 11, die kraftfahrzeugseitig angeordnet ist. Das Kommunikationsfeld 30 kann in einer möglichen Ausführungsform der Erfindung an einem Heckemblem 10 des Kraftfahrzeuges 1 angeordnet sein.

Nachdem die Parklücke 2 über die Elektronikeinheit 20 lokalisiert worden ist, erfolgt gemäß Figur 5 der Schritt 110, bei dem am Außenbereich 9 des Kraftfahrzeuges 1 das Kommunikationsfeld 30 durch den Benutzer 3 aktiviert wird. Bevor der Antrieb 4 tatsächlich zum Einparkvorgang aktiviert wird, erfolgt aus Sicherheitsgründen die soeben genannte Authentifizierungsabfrage im Schritt 120. Erst wenn diese Abfrage positiv ist, erfolgt der Einparkvorgang des Kraftfahrzeuges 1, wobei der Benutzer 3 sich nicht im Kraftfahrzeug 1 befindet sondern eine oder mehrere Bewegungsmuster 32 vor dem Kommunikationsfeld 30 ausübt, um das Einparken des Kraftfahrzeuges 1 bewusst zu beeinflussen.

Gemäß Figur 3 ist ein weiteres, mögliches Bewegungsmuster 32 gezeigt, welches erfordert, dass der Benutzer 3 mit seinem Fuß zumindest teilweise unterhalb des Kraftfahrzeuges 1 "kickt", um den Antrieb 4 des Kraftfahrzeuges 1 anzusteuern. Hier weist das Kommunikationsfeld 30 zwei Überwachungszonen 31 auf. Ebenfalls kann nur eine Überwachungszone 31 denkbar sein, die z. B. lediglich den Fuß detektiert.

Während des Schrittes 130 gemäß Figur 5, bei dem der Antrieb 4 des Kraftfahrzeuges 1 für den Einparkvorgang aktiviert wird, kann es sinnvoll sein, die Elektronik, einschließlich die Sensoren des Parkassistenzsystems 50 aktiv zu schalten, um sicher und zuverlässig das Kraftfahrzeug 1 in die Parklücke 2 manövrieren zu können.

### Bezugszeichenliste

- 1: Kraftfahrzeug
- 2: Parklücke
- 3: Benutzer
- 4: Antrieb
- 5: Authentifizierungsabfrage
- 6: Heckbereich
- 7: Handhabe
- 8: Kraftfahrzeuginnenraum
- 9: Außenbereich des Kraftfahrzeuges
- 10: Heckemblem
- 11: Sende- und/oder Empfangseinheit
- 12: Boden
- 13: Hand
- 14: Richtung
- 15: Richtung

- 20: Elektronikeinheit

- 30: Kommunikationsfeld
- 31: Überwachungszone
- 32: Bewegungsmuster
- 33: Bedienfeld
- 34: Taster
- 35: Sensor
- 36: optische Anzeige

- 40: ID-Geber

- 50: Parkassistenzsystem

## Patentansprüche

1. System zum Einparken eines Kraftfahrzeuges (1) in eine Parklücke (2), mit
einer innerhalb des Kraftfahrzeuges (1) angeordneten Elektronikeinheit (20), die bei einer Aktivierung durch einen Benutzer (3) eine mögliche Parklücke (2) sucht,
einem Kommunikationsfeld (30), das derart am Kraftfahrzeug (1) angeordnet ist, dass das Kommunikationsfeld (30) von außerhalb des Kraftfahrzeuges (1) durch den Benutzer (3) aktivierbar ist, um einen Antrieb (4) des Kraftfahrzeuges (1) zu steuern, wodurch ein fahrerloses Einparken erfolgt, wobei das Kommunikationsfeld (30) mindestens eine Überwachungszone (31) aufweist, wobei über ein definiertes Bewegungsmuster (32) des Benutzers (3) in der Überwachungszone (31) das Kommunikationsfeld (30) aktivierbar ist, wobei das Kommunikationsfeld (30) ein Bedienfeld (33) aufweist.

2. System nach Anspruch 1,
**dadurch gekennzeichnet,**
**dass** das Kommunikationsfeld (30) einen Taster (34) und/oder einen Berührungssensor (35) und/oder einen Näherungssensor (35) aufweist und/oder dass das Kommunikationsfeld (30) mit einem Taster (34) und/oder einen Berührungssensor (35) und/oder einen Näherungssensor (35) elektronisch verbunden ist.

3. System nach einem der vorhergehenden Ansprüche,
**dadurch gekennzeichnet,**
**dass** ein mobiler ID-Geber (40) vorgesehen ist, der zur Authentifizierungsabfrage (5) mit dem Kraftfahrzeug (1), insbesondere mit der Elektronikeinheit (20) dient.

4. System nach einem der vorhergehenden Ansprüche,
**dadurch gekennzeichnet,**
**dass** über die Aktivierung des Kommunikationsfelds (30) eine Datenkommunikation mit dem mobilen ID-Geber (40) aufbaubar ist, um die Authentifizierungsabfrage (5) durchzuführen, und/oder dass über das Kommunikationsfeld (30) ein elektromagnetisches Feld aufbaubar ist, insbesondere dass das elektromagnetische Feld durch Induktion erzeugbar ist.

5. System nach einem der vorhergehenden Ansprüche,
**dadurch gekennzeichnet,**
**dass** das Kommunikationsfeld (30) am Heckbereich (6) des Kraftfahrzeuges (1) oder am vorderen Bereich des Kraftfahrzeuges (1) angeordnet ist, insbesondere dass das Kommunikationsfeld (30) an einer Handhabe (7) des Kraftfahrzeuges (1) angeordnet ist.

6. System nach einem der vorhergehenden Ansprüche,
**dadurch gekennzeichnet,**
**dass** die Elektronikeinheit (20) mit einem Parkassistenzsystem (50) verbunden ist und/oder dass die Elektronikeinheit (20) Teil eines Parkassistenzsystems (50) ist.

7. System nach einem der vorhergehenden Ansprüche,
**dadurch gekennzeichnet,**
**dass** das Kommunikationsfeld (30) mindestens ein Bedienfeld (33) aufweist, um das Einparken zu beeinflussen, insbesondere zu beenden oder zu korrigieren.

8. System nach einem der vorhergehenden Ansprüche,
**dadurch gekennzeichnet,**
**dass** das Kommunikationsfeld (30) eine optische Anzeige (36) aufweist, und/oder dass das Kommunikationsfeld (30) an einem Heckemblem (10) des Kraftfahrzeuges (1) angeordnet ist.

9. Verfahren zum Einparken eines Kraftfahrzeuges (1) in eine Parklücke (2), mit folgenden Schritten:
(a) Erkennen einer geeigneten Parklücke (2) durch eine Elektronikeinheit (20) des Kraftfahrzeuges (1),
(b) Überführen eines ID-Gebers (40), den ein Benutzer (3) bei sich trägt, vom Kraftfahrzeuginnenraum (8) in die Nähe eines Außenbereiches (9) des Kraftfahrzeuges (1), das ein Kommunikationsfeld (30) aufweist,
(c) Aktivieren des Kommunikationsfeldes (30) durch den Benutzer (3), wodurch ein Antrieb (4) des Kraftfahrzeuges (1) aktiviert wird und das Kraftfahrzeug (1) fahrerlos in die Parklücke (2) fährt, wobei das Kommunikationsfeld (30) eine Überwachungszone (31) aufweist, wobei über ein Bewegungsmuster (32) des Benutzers (3) innerhalb der Überwachungszone (31) der Antrieb (4) des Kraftfahrzeuges (1) entsprechend gesteuert wird, wobei das Kommunikationsfeld (30) ein Bedienfeld (33) aufweist.

10. Verfahren nach Anspruch 9,
**dadurch gekennzeichnet,**
**dass** der Schritt (a) automatisch gestartet wird oder durch eine bewusste Handlung des Benutzers (3) innerhalb des Kraftfahrzeuges (1) gestartet wird, und/oder dass vor dem Schritt (c) oder während des Schrittes (c) eine Authentifizierungsabfrage (5) zwischen dem ID-Geber (40) und dem Kraftfahrzeug (1) erfolgt, wobei bei einem negativen Ergebnis der Authentifizierungsabfrage (5) der Schritt (c) abgebrochen wird.

11. Verfahren nach einem der vorhergehenden Ansprüche,
**dadurch gekennzeichnet,**
**dass** eine Vorwärtsbewegung und/oder eine Rückwärtsbewegung und/oder eine Richtungskorrektur und/oder eine Seitenbewegung und/oder eine Beschleunigung und/oder eine Verlangsamung und/oder ein Einparkabbruch des Kraftfahrzeug (1) erfolgt.

12. Verfahren nach einem der vorhergehenden Ansprüche,
**dadurch gekennzeichnet,**
**dass** das Kommunikationsfeld (30) eine optische Anzeige (36) aufweist, die während des Einparkens eine optische Rückmeldung dem Benutzer (3) liefert, insbesondere inwieweit der Einparkvorgang aktiv ist oder abgeschlossen ist, und/oder dass während des Schrittes (c) ein Parkassistenzsystem (50) des Kraftfahrzeuges (1) aktiv ist.

13. Verfahren nach einem der vorhergehenden Ansprüche,
**dadurch gekennzeichnet,**
**dass** die Elektronikeinheit (20) eine Sensorik aufweist, die während des Schrittes (a) den Außenbereich (9) des Kraftfahrzeuges (1) nach einer Parklücke (2) untersucht, insbesondere dass das Auffinden einer Parklücke (2) mittels zumindest einer Kamera oder mittels Radar durchgeführt wird.

14. Verfahren nach einem der vorhergehenden Ansprüche zum Betreiben eines Systems nach einem der Ansprüche 1 bis 8.

## Claims

1. System for parking of a motor vehicle (1) in a parking space (2), with an electronics unit (20) arranged inside of the motor vehicle (1), which electronics unit, in an activation by a user (3), searches for a possible parking space (2), a communications field (30) that is arranged on the motor vehicle (1) in such a way that the communications field (30) can be activated from outside of the motor vehicle (1) by the user (3), in order to control a drive (4) of the motor vehicle (1), whereby a driverless parking is effected, wherein the communications field (30) comprises at least one surveillance zone (31), wherein, via a defined movement pattern (32) of the user (3) in the surveillance zone (31), the communications field (30) is activatable, wherein the communications field (30) comprises a control panel (33).

2. System according to claim 1,
**characterized in that**
the communications field (30) comprises a sensing device (34) and/or a touch sensor (35) and/or a proximity sensor (35), and/or **in that** the communications field (30) is connected with a sensing device (34) and/or a touch sensor (35) and/or a proximity sensor (35).

3. System according to one of the preceding claims,
**characterized in that**
a mobile ID-transmitter (40) is provided, which serves for the authentication request (5) with the motor vehicle (1), in particular with the electronics unit (20).

4. System according to one of the preceding claims,
**characterized in that**
via the activation of the communications field (30), a data communication with the mobile ID-transmitter (40) can be established in order to execute the authentication request (5), and/or **in that**, via the communications field (30), an electromagnetic field can be established, in particular that the electromagnetic field can be generated by induction.

5. System according to one of the preceding claims,
**characterized in that**
the communications field (30) is arranged on the rear area (6) of the motor vehicle (1), or on the front area of the motor vehicle (1), in particular that the communications field (30) is arranged on a handle (7) of the motor vehicle (1).

6. System according to one of the preceding claims,
**characterized in that**
the electronics unit (20) is connected with a parking assistance system (50) and/or **in that** the electronics unit (20) is part of a parking assistance system (50).

7. System according to one of the preceding claims,
**characterized in that**
the communications field (30) comprises at least one operating panel (33), in order to influence the parking, in particular to end or to correct.

8. System according to one of the preceding claims
**characterized in that**
the communications field (30) comprises a visual display (36), and/or **in that** the communications field (30) is arranged on a rear emblem (10) of the motor vehicle (1).

9. Method for parking of a motor vehicle (1) in a parking space (2), comprising the following steps:
(a) recognizing a suitable parking space (2) via the electronics unit (20) of the motor vehicle (1),
(b) transferring of an ID-transmitter (40), which a user (3) carries with them, from the motor vehicle inner area (8) into the vicinity of an outer area (9) of the motor vehicle (1), which comprises a communications field (30),
(c) activating of the communications field (30) by the user (3), whereby a drive (4) of the motor vehicle (1) is activated and the motor vehicle (1) drives into the parking space (2) in a driverless manner, wherein the communications field (30) comprises a surveillance zone (31), wherein, via a movement pattern (32) of the user (1) inside the surveillance zone (31), the drive (4) of the motor vehicle (1) is correspondingly controlled, wherein the communications field (30) comprises a control panel (33).

10. Method according to claim 9,
**characterized in that**
the step (a) is started automatically, or is started through an intentional action of the user (3) inside the motor vehicle (1), and/or **in that**, before the step (c) or during the step (c), an authentication request (5) between the ID-transmitter (40) and the motor vehicle (1) occurs, wherein, in the case of a negative result of the authentication request (5), the step (c) is aborted.

11. Method according to one of the preceding claims,
**characterized in that**
a forward movement and/or a rearward movement and/or a directional change and/or a lateral movement and/or an acceleration and/or a deceleration and/or a termination of the parking of the motor vehicle (1) occurs.

12. Method according to one of the preceding claims,
**characterized in that**
the communications field (30) comprises a visual display (36), which, during the parking, provides a visual feedback to the user (3), in particular to what extent the parking process is active or is completed, and/or **in that**, during the step (c), a parking assistance system (50) of the motor vehicle (1) is active.

13. Method according to one of the preceding claims,
**characterized in that**
the electronics unit (20) comprises a sensor system, which, during the step (a), examines the outside area of the motor vehicle (1) for a parking space (2), in particular **in that** the locating of a parking space (2) is carried out by means of at least one camera, or by means of radar.

14. Method according to one of the preceding claims, for operating a system according to one of claims 1 to 8.

## Revendications

1. Système pour garer un véhicule automobile (1) dans un espace de stationnement (2), comprenant une unité électronique (20) disposée à l'intérieur du véhicule automobile (1), laquelle, lors de l'activation par un utilisateur (3), cherche un éventuel espace de stationnement (2), comprenant un champ de communication (30) qui est disposé sur le véhicule automobile (1) de manière à ce que le champ de communication (30) soit activable par l'utilisateur (3) depuis l'extérieur du véhicule automobile (1) afin de commander un entraînement (4) du véhicule automobile (1), sur quoi un stationnement sans conducteur est réalisé, le champ de communication (30) présentant au moins une zone de surveillance (31), le champ de communication (30) étant activable par l'intermédiaire d'un modèle de mouvement (32) défini de l'utilisateur (3) dans la zone de surveillance (31), le champ de communication (30) présentant un champ de commande (33).

2. Système selon la revendication 1,
**caractérisé en ce**
**que** le champ de communication (30) présente une touche (34) et/ou un capteur de contact (35) et/ou un capteur de proximité (35), et/ou en ce que le champ de communication (30) est relié électroniquement à une touche (34) et/ou à un capteur de contact (35) et/ou à un capteur de proximité (35).

3. Système selon l'une quelconque des revendications précédentes,
**caractérisé en ce**
**qu'**un émetteur ID (40) mobile est prévu, lequel sert à l'interrogation d'authentification (5) avec le véhicule automobile (1), notamment avec l'unité électronique (20).

4. Système selon l'une quelconque des revendications précédentes,
**caractérisé en ce**
**qu'**une communication de données avec l'émetteur ID (40) mobile peut être établie par l'intermédiaire de l'activation du champ de communication (30) afin de réaliser l'interrogation d'authentification (5), et/ou en ce qu'un champ électromagnétique peut être établi par l'intermédiaire du champ de communication (30), notamment en ce que le champ électromagnétique peut être généré par induction.

5. Système selon l'une quelconque des revendications précédentes,
**caractérisé en ce**
**que** le champ de communication (30) est disposé sur la partie arrière (6) du véhicule automobile (1) ou sur la partie avant du véhicule automobile (1), notamment en ce que le champ de communication (30) est disposé sur une poignée (7) du véhicule automobile (1).

6. Système selon l'une quelconque des revendications précédentes,
**caractérisé en ce**
**que** l'unité électronique (20) est reliée à un système d'aide au stationnement (50), et/ou en ce que l'unité électronique (20) fait partie d'un système d'aide au stationnement (50).

7. Système selon l'une quelconque des revendications précédentes,
**caractérisé en ce**
**que** le champ de communication (30) présente au moins un champ de commande (33) afin d'influencer le stationnement, notamment pour le terminer ou le corriger.

8. Système selon l'une quelconque des revendications précédentes,
**caractérisé en ce**
**que** le champ de communication (30) présente un affichage optique (36), et/ou en ce que le champ de communication (30) est disposé sur un emblème arrière (10) du véhicule automobile (1).

9. Procédé pour garer un véhicule automobile (1) dans un espace de stationnement (2), comprenant les étapes suivantes :
(a) reconnaissance d'un espace de stationnement (2) approprié par une unité électronique (20) du véhicule automobile (1),
(b) transfert d'un émetteur ID (40), qu'un utilisateur (3) porte sur lui, de l'intérieur (8) du véhicule automobile à proximité d'une zone extérieure (9) du véhicule automobile (1) qui présente un champ de communication (30),
(c) activation du champ de communication (30) par l'utilisateur (3), sur quoi un entraînement (4) du véhicule automobile (30) est activé et le véhicule automobile (1) se rend sans conducteur dans l'espace de stationnement (2), le champ de communication (30) présentant une zone de surveillance (31), l'entraînement (4) du véhicule automobile (1) étant commandé de manière appropriée par l'intermédiaire d'un modèle de mouvement (32) de l'utilisateur (3) au sein de la zone de surveillance (31), le champ de communication (30) présentant un champ de commande (33).

10. Procédé selon la revendication 9,
**caractérisé en ce**
**que** l'étape (a) est démarrée automatiquement ou est démarrée par une action volontaire de l'utilisateur (3) à l'intérieur du véhicule automobile (1), et/ou en ce qu'avant l'étape (c) ou pendant l'étape (c), une interrogation d'authentification (5) est réalisée entre l'émetteur ID (40) et le véhicule automobile (1), l'étape (c) étant interrompue en cas d'un résultat négatif de l'interrogation d'authentification (5).

11. Procédé selon l'une quelconque des revendications précédentes,
**caractérisé en ce**
**qu'**un mouvement avant et/ou un mouvement arrière et/ou une correction de direction et/ou un mouvement latérale et/ou une accélération et/ou un ralentissement et/ou une interruption de stationnement du véhicule automobile (1) sont réalisés.

12. Procédé selon l'une quelconque des revendications précédentes,
**caractérisé en ce**
**que** le champ de communication (30) présente un affichage optique (36) qui, pendant le stationnement, fournit à l'utilisateur (3) une rétroaction visuelle, notamment dans quelle mesure l'opération de stationnement est active ou achevée, et/ou en ce que pendant l'étape (c), un système d'aide au stationnement (50) du véhicule automobile (1) est actif.

13. Procédé selon l'une quelconque des revendications précédentes,
**caractérisé en ce**
**que** l'unité électronique (20) présente un système capteur qui, pendant l'étape (a), examine la zone extérieure (9) du véhicule automobile (1) pour rechercher un espace de stationnement (2), notamment en ce qu'un espace de stationnement (2) est trouvé au moyen d'au moins d'une caméra ou par radar.

14. Procédé selon l'une quelconque des revendications précédentes, destiné au fonctionnement d'un système selon l'une quelconque des revendications 1 à 8.
